# EUROPEAN PATENT SPECIFICATION

(11) **EP 3 128 885 B1**
(45) Date of publication and mention of the grant of the patent: **07.06.2023**
(21) Application number: 15719044.8
(22) Date of filing: 08.04.2015
(51) Int. Cl.: A47J 37/12, E03C 1/262

(54) **FILTERING DRAIN PLUG FOR A KITCHEN APPLIANCE**
FILTERNDER ABFLUSSSTOPFEN FÜR EIN KÜCHENGERÄT
BOUCHON DE VIDANGE À FILTRATION POUR UN APPAREIL DE CUISINE

(30) Priority: 11.04.2014 FR 1453236
(43) Date of publication of application: 15.02.2017
(73) Proprietor: Illinois Tool Works Inc., Glenview, IL 60025 (US)
(72) Inventor: GAULARD, Herve, F-39700 Courtefontaine (FR); LUBRINA, Yves, F-39800 Chaussenans (FR); BOURGIN, Florent, F-25440 Pointvillers (FR)
(74) Representative: HGF
(86) International application number: PCT/US2015/024896
(87) International publication number: WO 2015/157400

(56) References cited:
- DE-U1- 29 911 165
- DE-U1- 29 911 165
- GB-A- 289 356
- GB-A- 289 356
- US-A- 1 173 798
- US-A- 2 075 443
- US-A- 2 075 443
- US-A- 2 792 574
- US-A1- 2010 071 122
- US-B1- 6 276 000
- US-B1- 6 276 000

## Description

### TECHNICAL FIELD

The present invention relates to a filtering drain plug for a kitchen appliance and in particular of a cooking appliance such as a braising pan or fryer.

### PRIOR ART

Numerous professional cooking appliances have a cooking vessel, this vessel being able to have a drain hole or evacuation hole for cooking products and/or cooking water or washing water. It is known to equip the drain hole of this type of appliance with a drain plug.

GB289356 A relates to a device for preventing choking of the waste pipes of sinks, wash-basins and the like.

US 2075443 A relates generally to drains for water receptacles and the like and more particularly to the construction of an improved drain in which is included a valve structure for preventing the escape of the water through the drain pipe.

DE 29911165 U1 relates to an innovative drain dirt collecting element against pipe clogging.

US 6276000 B1 relates to a combined strainer and stopper device for basins, sinks and the like.

US20100071122A1 relates to a pop-up stopper having draining and straining functions.

US 2792574 A relates to strainers particularly adapted for use in sinks, and has for a specific object the provision of expendable cups for collecting refuse.

US 1173798 A related to providing a plug to stop the outlet in a kitchen sink, which may be readily applied to the ordinary drain pipe, having a strainer plate at the base of the sink over its inlet, and having its end outwardly flared and screwed into the base of the sink.

For example, a conventional braising pan comprises a cooking vessel, the drain hole of which is equipped with a drain plug which consists simply of a stopper made of synthetic material, generally polytetrafluoroethylene (PTFE), in order to be heat resistant and to have a degree of elasticity so as to seal off the vessel. This plug is generally quite tall and has in its top part gripping means which are intended to be located above the maximum upper level of liquid contained in the vessel in order to be accessible to a user.

This plug may also be in the form of a tube and have a predetermined height in order to act as an overflow. The liquid in the vessel that is located above its maximum upper level then flows through the inside of the tube to the drain hole.

Further, more advanced appliances comprise a drain plug of small diameter that is intended only for washing water and cooking water. This plug generally has a small throughput and does not have gripping means. It is generally controlled by means located under the vessel, it being possible for said means to be motorized. This is the case in particular for a conventional sink plug.

This type of plug is generally associated with a tilting vessel, the tilting of the vessel serving in this case mainly to collect the cooking products contained in the vessel. Depending on the type of cooking that is carried out, users employ various accessories such as sieves of strainers in order to filter for example juices or sauces. They can also use a funnel when cooking pasta or vegetables in order to evacuate the cooking water before collecting the cooked products.

US-B 1-6,276,000 discloses a combined strainer and stopper for basin drain, the device including a perforated cylindrical housing having an open lower end defining an annular valve seat. The device further includes a valve disc reciprocable in the housing into and out of sealing engagement with the valve seat. However, the valve disc is not as such suitable to shut off the drain hole and the housing is not adapted to filter and collect the solid particles contained in a cooking water passing through the drain hole.

The invention provides an improvement to the existing technologies which is simple, effective and economical.

### SUMMARY OF THE INVENTION

The invention thus proposes a filtering drain plug according to claim 1.

The invention thus proposes a filtering drain plug, that is to say a drain plug equipped with filtering means which in this case comprise a filter basket. According to the invention, this filter basket is mounted so as to be able to move with respect to the stopper, this having numerous advantages since it makes it possible, in particular, to carry out, in a practical manner, various operations associated with the draining of a vessel of a professional cooking appliance. The invention makes it possible for example to filter the products in the vessel to be evacuated if the user so wishes. It is compatible with a large-diameter drain hole and does not require additional accessories such as a strainer for example.

The filter basket is mounted so as to be able to move in translation along a longitudinal axis of the stopper and/or in rotation along this longitudinal axis and/or in rotation along an approximately transverse axis of the stopper.

The plug is configured for example such that the filter basket is movable at least:
- from a first position in which it is close to the stopper to a second position in which it is spaced apart from the stopper, the movement of the filter basket from the first position to the second position being carried out by the filter basket being moved in translation along the longitudinal axis of the stopper, and/or
- from a third position in which it is approximately coaxial with the stopper to a fourth position in which its longitudinal axis forms an angle with that of the stopper, the movement of the filter basket from the third position to the fourth position being carried out by the filter basket being rotated about an approximately transverse axis.

The movement of the filter basket from the first to the second position can be likened to a movement of the stopper along its longitudinal axis, between a position in which it is close to the filter basket and a position in which it is spaced apart therefrom. This makes it possible for example for a user to withdraw the stopper from the drain hole (in order to drain the vessel) while leaving the filter basket in place in the drain hole, in order that the cooking products are filtered.

The movement of the filter basket from the third to the fourth position can be likened to a movement of the stopper about a transverse axis, between a position in which the stopper and the basket are coaxial and another position in which they are no longer coaxial. This makes it possible for example for a user, in particular when the stopper is spaced apart from the filter basket (and is for example in the abovementioned second position), to tilt the stopper in order to provide access to the interior of the filter basket. It is thus easier to collect the products contained in the basket or to wash the latter, for example.

The filter basket preferably comprises at least one filter wall having a plurality of orifices for liquid to pass through. This filter wall has for example an elongate tubular shape. It may have a cylindrical shape. The orifices for liquid to pass through may have an orientation that is substantially radial with respect to a longitudinal axis of the filter wall.

The filter basket may be fixed to the stopper in a removable manner. The filter basket is thus of the removable type, thereby making it easier to clean.

Advantageously, the filter basket defines an internal space, one longitudinal end of which is closed by a transverse wall integral with the filter basket. This transverse wall preferably has a disk shape.

The filter basket is connected, at its end opposite said transverse wall, to a ring. The ring has an outside diameter greater than an outside diameter or than the maximum transverse dimension of said filter basket. The external periphery of the ring can thus form bearing means, in particular axial bearing means.

The ring comprises at least one orifice or cutout in which a rod carried by the stopper is mounted so as to be able to slide and/or rotate. Preferably, the ring comprises two diametrically opposite orifices or cutouts in each of which a rod carried by the stopper is mounted so as to be able to slide and/or rotate.

The orifices or cutouts may be designed to allow the filter basket to be disassembled from the stopper, for example by removing the rod from each of these orifices or cutouts. For this purpose, the rods may be movable with respect to one another, for example by being spaced apart from one another. One end of each rod may be anchored in an elastically deformable block of the stopper, thereby allowing the opposite free end of the rod to move.

The stopper is preferably connected to a handle for handling the plug. The plug according to the invention is thus able to be handled manually, for example in order to manually regulate the rate of draining of a vessel. Specifically, all that is necessary is to remove the stopper from the drain hole and to space it apart to a greater or lesser extent from this hole in order to regulate the rate of draining, which depends in particular on the flow cross section delimited between the stopper and the drain hole.

The handle may be connected to one end of a bar the opposite end of which is connected to the stopper. This bar is preferably graduated. It may be approximately parallel to the longitudinal axis of the stopper.

The stopper is preferably designed to be inserted entirely into the drain hole. The stopper thus does not project from the wall having this drain hole. This is particularly advantageous in particular in the context of a cooking wall, since the stopper does not take up room in the cooking space defined by the wall. The bottom of the vessel having this cooking wall is thus free, thereby providing the user with greater comfort and useful cooking area.

The handle may also be designed to limit its size. It preferably has a shape that makes it possible to avoid accidental opening of the plug while foodstuffs are being put in the vessel or cooked.

The present invention also relates to a drain plug, which is preferably removable, for a drain hole, in particular of a kitchen appliance, having a stopper designed to shut off said drain hole, and a filter basket which is designed to be received in said drain hole, beneath said stopper, characterized in that the filter basket is mounted so as to be able to slide and/or rotate on at least one rod carried by the stopper. This stopper may comprise all or some of the abovementioned features.

The present invention also relates to an assembly having a drain plug as described above and a vessel, in particular a cooking vessel, this vessel having a wall equipped with a drain hole in which said plug is mounted, preferably in a removable manner.

Advantageously, the drain hole comprises an internal cylindrical shoulder the inside diameter of which is greater than the outside diameter or than the maximum transverse dimension of said transverse wall and less than the outside diameter of said ring. It will thus be understood that the ring of the filter basket is able to bear axially on the shoulder of the drain hole. This makes it possible to precisely and stably position the filter basket in the drain hole.

Preferably, the handle comprises or forms bearing means for bearing on a part of the vessel and means for keeping the stopper in a position for draining the vessel. The user can thus lift the stopper in order to remove it from the drain hole and rest the handle or the bearing means thereof on the part of the vessel in order that the stopper is kept in this raised position. The filter basket, which remains in the drain hole, thus receives the products contained in the vessel, which are thus filtered.

The present invention further relates to an assembly having a vessel, in particular a cooking vessel, and a drain plug, which is preferably removable, for a drain hole of said vessel, the drain plug having a stopper designed to shut off said drain hole, and a filter basket which is designed to be received in said drain hole, beneath said stopper, and which is mounted so as to be able to move with respect to the stopper, characterized in that the stopper is connected to a handle for handling the plug, this handle comprising or forming bearing means for bearing on a part of the vessel and means for keeping the stopper in a position for draining the vessel. This assembly may comprise all or some of the abovementioned features relating to the plug.

Finally, the invention relates to a kitchen appliance, in particular a cooking appliance, having a drain plug or an assembly as described above.

### DESCRIPTION OF THE FIGURES

The invention will be better understood and further details, features and advantages of the invention will become apparent from reading the following description that is given by way of nonlimiting example with reference to the appended drawings, in which:
figures 1 and 2 are schematic perspective views of a cooking appliance according to the invention, this appliance having in this case at least one removable collecting tank which is in the stowed position in figure 1 and the extracted position in figure 2,
figure 3 is a schematic perspective view of a cooking vessel of the appliance from figures 1 and 2, this vessel having a cooking wall having a drain hole in which a filtering drain plug according to the invention is mounted,
figure 4 is a schematic perspective and sectional view of the cooking appliance, of the vessel and of the filtering plug from figures 1 to 3, the stopper of the filtering plug being in this case in the raised position or position for draining the vessel,
figure 5 is another schematic perspective and sectional view of the vessel and of the filtering plug from figures 1 to 3, the stopper of the filtering plug being in this case in the lowered position or position for shutting off the drain hole of the vessel,
figures 6 and 7 are partial schematic perspective views of the handle of the filtering plug and of the cooking vessel,
figures 8 to 10 are schematic perspective views of the filtering plug from figures 3 to 5,
figure 11 is a schematic perspective view in axial section of the filtering plug from figures 3 to 5,
figure 12 is another schematic perspective view of the filtering plug from figures 3 to 5, and
figures 13 and 14 are schematic perspective views of a variant embodiment of the filtering drain plug according to the invention.

### DETAILED DESCRIPTION

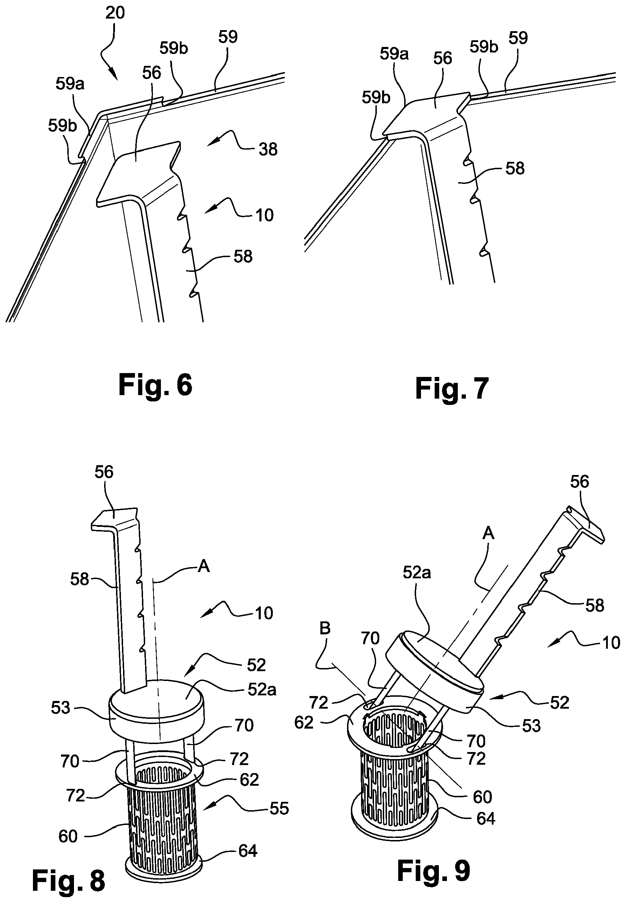

The figures show particular exemplary embodiments of a filtering drain plug 10 according to the invention (visible in particular in figures 6 to 9) and also of a kitchen appliance 20, in particular a cooking appliance, equipped with this plug 10.

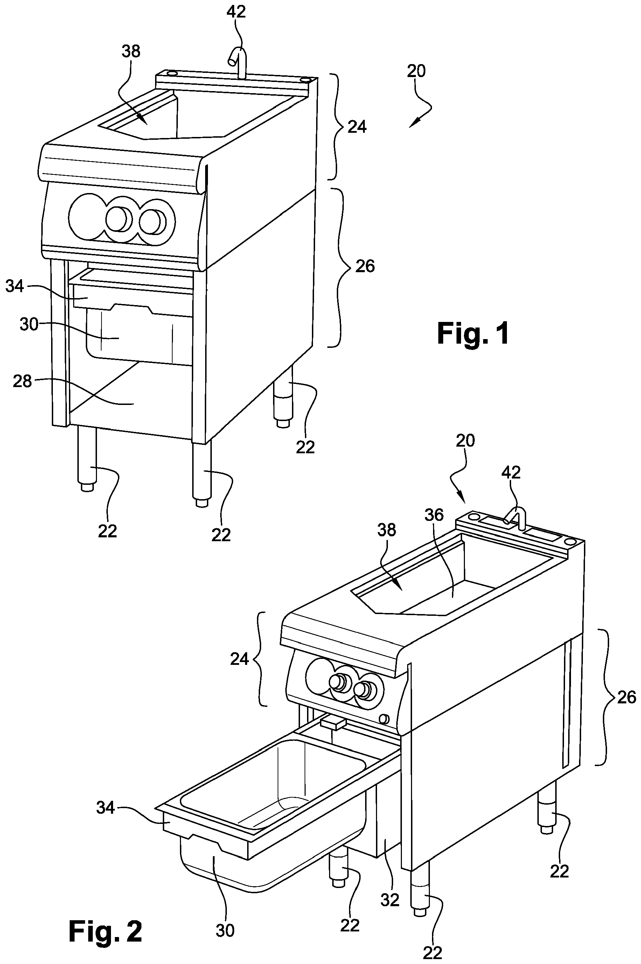

Figures 1 and 2 show the cooking appliance 20 as a whole, the cooking appliance in this case being a braising pan or fryer.

Typically, this type of appliance has a parallelepipedal overall shape and has an approximately vertical front face (that is accessible to a user) and an approximately vertical rear face, approximately vertical side faces that are perpendicular to the front and rear faces, and an approximately horizontal upper face (that is also accessible to a user) and an approximately horizontal lower face. As in the example shown, in order to set the upper face of the appliance 20 at a given height and to make it easier to clean the ground under the appliance, the appliance 20 may be equipped with height-adjustable feet 22, resting on the ground, which are connected to the lower face of the appliance.

The appliance 20 has essentially two parts, an upper part 24 and a lower part 26. The lower part 26 of the appliance comprises two side walls which define between one another a space 28 for housing at least one collecting tank 30, 32. The space 28 opens onto the front face of the appliance 20 such that the tanks 30, 32 are accessible from the front of the appliance.

The tanks 30, 32 are in this case removable. They are mounted one behind the other on a sliding frame 34, for example by way of a system of slide rails. The tanks 30, 32 are in this case movable in a horizontal plane and in a direction approximately perpendicular to the front face of the appliance.

The tanks 30, 32 can be moved from a stowed position, shown in figure 1, in which they are both housed in the space 28, to an extracted position, shown in figure 2, in which they are both extracted from the space 28. They can be moved into any intermediate position between the two abovementioned extreme positions.

The tank 30, located at the front, can be a tank for collecting cooking products (such as a GN tank). The tank 32, located at the rear, can be a tank for collecting cooking oil, in this case having a smaller volume than the tank 30.

The upper part 34 of the appliance 20 comprises means for heating and for regulating the heating of a cooking wall 36, which is in this case an approximately horizontal lower wall of a cooking vessel 38.

The cooking vessel 38 has in this case an approximately vertical front wall and rear wall and approximately vertical side walls. These walls extend upward from the cooking wall 36 and define with the latter a volume intended to contain products to be cooked. The front wall forms in this case a dihedron, the apex of which is oriented toward the front of the appliance 20.

The vessel 38 is in this case of the fixed type, that is to say it is mounted in a fixed manner on the appliance 20 and is not intended to be removed or tilted in order to be drained.

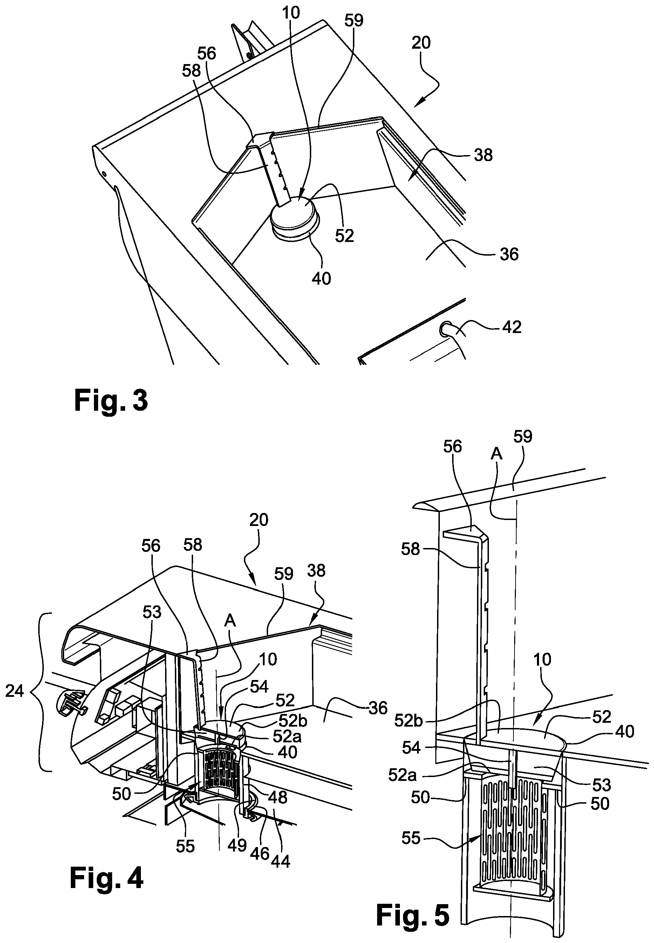

The cooking wall 36 preferably comprises a single drain hole 40. This limits cleaning and simplifies the cooking vessel 38 compared with a separate drain for the product and a drain for washing or cooking water. The hole 40 is in this case located in the vicinity of the front end of the cooking wall 36, approximately in the middle of the latter. It can be seen in figures 3 and 4 that the vertical median plane of the appliance 20 passing from the front to the rear in the middle of the vessel 38 passes through the hole 40 and through the apex of the abovementioned dihedron.

The means for heating and regulating the heating of the appliance 20 are not part of the invention and will not be described in the present application. The regulating means are located on the front face of the appliance 20 and are accessible to the user. The heating means are located beneath the cooktop 36.

The upper part 24 of the appliance 20 can be connected by an appropriate means 42 to a general water inlet, with a view to using water for cooking the products and for cleaning the vessel 38 after it has been used.

The upper part 34 of the appliance 20 furthermore comprises an approximately horizontal lower wall 44 which extends under the cooking wall 36 and at a distance therefrom.

The wall 44 comprises a hole 46 for draining the vessel 38, which is aligned vertically with the hole 40 in the vessel 38. The holes 40, 46 are connected together by a cylindrical tube 48 which may have a diameter greater than or equal to 30 or 40 mm, for example 60 mm.

The upper end of the tube 48 is fixed beneath the cooktop 36 and its lower end can pass through the hole 46 and project from the inner face of the wall 44 (figure 4). An annular seal 49 may be mounted between the lower end of the tube 48 and the peripheral edge of the hole 46.

The tube 48 comprises an internal cylindrical shoulder 50 in the vicinity of its upper end.

According to the invention, the cooking appliance 20 is equipped with a filtering drain plug 10 which makes it possible in a reliable and economical manner to drain the vessel 38 and to separate the solid cooking products from the liquid cooking products, such as pasta from its cooking water.

Figures 3 to 12 show one embodiment of a filtering drain plug 10 according to the invention.

In the example shown, the filtering plug 10 comprises essentially three parts: a stopper 52, a filter basket 55 and a handling handle 56.

The stopper 52 has a cylindrical or frustoconical overall shape and is shaped so as to shut off the hole 40 in the cooking wall 36 in a sealed manner.

In the example shown, it comprises two substantially coaxial disks, an upper disk 52a and a lower disk 52b, between which an annular seal 53 is mounted. The disks 52a, 52b are at a distance from one another and are connected together by a pin 54 and a screw for example, the pin being in this case aligned with the longitudinal axis A of the stopper 52. The space between the disks is occupied by the seal 53, which is formed in this case by an annular block which is produced preferably from a material that is resistant to temperature, oils and detergents, such as a high-temperature silicone. The seal 53 has an outside diameter greater than that of the lower disk 52b such that it can engage with the internal peripheral edge of the hole 40 and the internal cylindrical surface of the tube 48. In the example shown, the seal 53 has a frustoconical overall shape, its lower end having a diameter less than that of its upper end. The frustoconical shape has the advantage of allowing slight compression of the seal when a vertical pressure is applied to the plug and, conversely, a slight traction on the plug rapidly frees the seal. The upper disk 52a preferably has an outside diameter less than that of the upper end of the seal 53 and also less than the inside diameter of the hole 40. The seal 53 is sandwiched between the two disks 52a, 52b and centered by the pin 54.

The stopper 52 is preferably designed to be housed in the upper end of the tube 48 such that the upper face of its upper disk 52a is aligned with the upper face of the cooking wall 36, as is visible in figure 5. The stopper 52 has a height or thickness which is equal to the longitudinal distance between the lower face of the disk 52b and the upper face of the disk 52a.

The stopper 52 of the plug could of course have some other design. It could for example comprise a cylindrical or frustoconical body that is surrounded by one or more O-ring seals that are intended to engage with the internal peripheral edge of the drain hole and/or the internal cylindrical surface of the drain tube.

The stopper 52 is connected to the handle 56 by a bar 58 which extends parallel to the axis A of the stopper and which has a length slightly less than the depth of the vessel 38. As is visible in figure 5, when the stopper 52 is mounted in the hole 40 and shuts it off, the bar 58 extends upward and the handle 56 is located just below the upper edge 59 of the vessel 38. When the stopper 52 is lifted and removed from the hole 40 by means of the handle 56, the latter can be positioned on the upper edge 59 of the vessel in order to keep the stopper in a raised position for draining the vessel 38, as is visible in figures 3 and 4.

The handle 56 is in this case formed by bending the upper end of the bar 58 so as to form a lip which is approximately perpendicular to the axis A and approximately horizontal in use. The handle 56 has a small thickness (identical to that of the bar 58).

In the example shown, the handle 56 has a shape more or less complementary to that of the front dihedral wall of the vessel 38. The handle 56 has in this case an end in the shape of an arrow and a pointed profile, the apex of which is intended to be oriented toward the front face of the appliance 20.

In order to position the handle on the upper edge 59 of the vessel 38, it is necessary first of all to pull the stopper 52 upward by means of the handle 56, in a direction parallel to the axis A, until the stopper 52 comes out of the hole 40 and the handle 56 is located substantially above a horizontal plane passing through the upper edge 59 of the vessel. This movement is rendered possible by the shape complementarity of the handle 56 with respect to the front wall of the vessel, the handle being able to slide or rub over this wall during the movement. Slight tilting of the handle 56 and thus of the stopper 58 toward the front of the appliance 20 may be necessary in order to move the handle 56 above the edge 59 of the vessel. This tilting is rendered possible by the capacity of the stopper 52 to rotate with respect to the filter basket 58, and of the filter basket to rotate with respect to the stopper, about at least one transverse axis, as will be described in more detail in the following text. It may also be necessary for the plug 10 to be rotated about the axis A by the handle 56. The handle 56 may then be positioned on the edge 59 of the vessel in order to keep the stopper in the raised position (figures 4 and 5).

Advantageously, as shown in figures 6 and 7, the edge 59 of the vessel 38 has a recess 59a for housing the handle 56. The recess 59a and the handle 56 have complementary shapes that allow the handle to be positioned precisely and securely. In the example shown, the recess 59a has a depth approximately equal to the thickness of the handle 56 such that the upper face of the handle is aligned with the upper surface of the vessel 38 and of the cooking appliance. The recess has an end in the shape of an arrow and a pointed profile and comprises, at its opposite ends, protrusions 59b for retaining the handle 56. Thus, when the plug 10 is in the position shown in figure 7, even if the user accidentally touches the filtering plug, the latter remains in place.

As shown in the drawings, the bar 58 may be graduated in order to indicate the volume of products contained in the vessel 38 to the user. It may for example comprise notches or lines that are regularly distributed along at least a part of its length. Of course, the volume of the vessel 38 depends on the dimensions thereof.

The filter basket 55 is mounted coaxially with the stopper 52. It comprises a cylindrical tubular wall 60 having orifices or slots for fluids to pass through, these orifices being oriented substantially radially with respect to the axis A. These orifices or slots are calibrated so as to retain the majority of common foodstuffs. Their shapes and dimensions can be different depending on the applications envisioned. The wall 60 extends between an upper ring 62 and a lower disk 64 which are disposed coaxially with the wall.

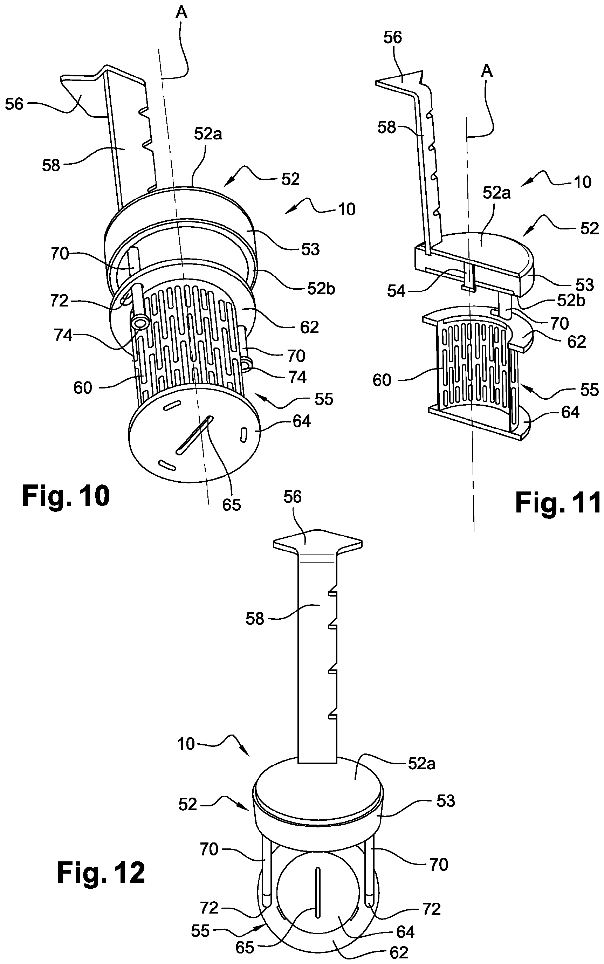

The lower disk 64 closes the lower end of the internal volume defined by the wall 60. The disk 64 may comprise at least one orifice or slot 65, as is visible in figure 10. The disk 64 has an outside diameter greater than that of the wall 60 and less than the inside diameter of the tube 48. The disk 64 defines with the tube 48 a predetermined rate of drainage. Specifically, the radial play between the external periphery of the disk 64 and the internal cylindrical surface of the tube 48 (that is to say the difference between the inside diameter of the tube 48 and the outside diameter of the disk 64) defines a predetermined annular flow cross section for liquid.

The upper ring 62 comprises an internal peripheral edge the diameter of which is close to the inside diameter of the wall 60, and an outside diameter which is greater than that of the wall 60 and also than that of the disk 64. The outside diameter of the ring 62 is greater than the inside diameter of the shoulder of the tube 48 (and less than the outside diameter of this shoulder) such that the ring 62 can bear axially on this shoulder, as is visible in figures 4 and 5. As a result of this bearing, the products to be drained cannot pass between the ring 62 and the tube 48 but are obliged to pass through the ring 62 and to be filtered by the tubular wall 60.

According to the invention, the filter basket 55 is mounted so as to be able to move, in this case in translation and in rotation, with respect to the stopper 52. In the example shown, the filter basket 55 and the stopper 52 are able to move in translation with respect to one another in a direction parallel to the axis A. They are thus movable from a moved-together position (figure 5) in which the lower disk 52b of the stopper is close to the ring 62, or even bearing axially on the latter, and a spaced-apart position (figures 3, 4 and 8 to 11) in which the stopper 52 and the filter basket 55 are at an axial distance from one another. This axial movement can be realized by simply pulling the handle along the axis A. The filter basket 55 and the stopper 52 are also able to move in rotation with respect to one another about the axis A, in this case with a small angular travel. The filter basket 55 and the stopper 52 are also able to move in rotation with respect to one another about a transverse axis B, in this case with a larger angular travel. They are thus movable from the spaced-apart position in figures 3, 4 and 8 to 11 to a tilted position (figure 9) in which the longitudinal axes of the stopper 52 and of the filter basket 55 form a non-zero angle between one another. This axial movement can be realized by simply handling the stopper by means of the handle 56.

In the example shown, these movements are rendered possible by rods 70 that are integral with the stopper 52 and mounted so as to slide in orifices or slots 72 in the filter basket 55.

The rods 70, of which there are two in this case, extend parallel to the axis A and their upper ends are fixed to the lower disk 52b of the stopper 52. They thus extend downwardly from the stopper 52. The rods 70 are in this case diametrically opposite one another. The rods 70 have an elongate cylindrical shape in this case. They each carry at their lower end a widened part 74 that forms a stop. This widened part could be formed by a nut screwed onto a threaded part of each rod.

The slots 72 for the rods 70 to slide in are formed in this case in the ring 62 of the filter basket 55. There are two such slots 72 and they are diametrically opposite one another. Each slot 72 has an elongate shape and may be oriented substantially circumferentially about the axis A. Each slot 72 has in this case an approximately ellipsoidal or oval shape. Each slot 72 has a width (or radial dimension with respect to the axis A) greater than the diameter or than the transverse dimension of the rod 70 and a length (or dimension in the circumferential direction) much greater than the diameter of the rod 70, such that the rods can slide freely in the slots in order to allow the abovementioned movements of the stopper 52 and of the filter basket 55 with respect to one another.

The axial range of movement of the stopper 52 with respect to the filter basket 55 is defined in this case by the ring 62 bearing on the stopper 52 on the one hand and on the widened lower parts 74 of the rods 70 on the other hand. The angular travel of the stopper 52 with respect to the filter basket 55 about the axis A is defined in this case by the rods 70 bearing on circumferential ends of the peripheral edges of the slots 72 on the one hand and on the opposite circumferential ends of these peripheral edges on the other hand. This angular travel is for example around 5-10°. The angular travel of the stopper 52 with respect to the filter basket 55 about the axis B is defined in this case by the rods 70 bearing on circumferential ends of the peripheral edges of the slots 72 (at the upper face of the ring 62) and simultaneously by the widened lower parts thereof bearing on the opposite circumferential ends of these peripheral edges (at the lower face of the ring 62), as is visible in figure 9. The angular travel between the tilted position in figure 9 and a position in which the stopper 52 and the filter basket 55 are coaxial is in the region of 40-60°. This angle makes it possible to completely free the upper opening in the filter basket 55, as is visible in figure 12.

The various components of the filter basket 55 can be produced from metal material(s) and be joined together by welding or brazing. These components and also the other metal parts (such as the disks 52a, 52b, the pin 54 and the bar 58) of the plug can be made of stainless steel, thereby making them dishwasher-proof.

The filtering drain plug 10 can for example be used in the following way.

The cooking vessel 38 is empty and the plug 10 is fitted in the drain hole 40 by means of its handle 56. For this purpose, the filter basket 55 is inserted into the tube 48 through the hole 40 such that it bears by way of its ring 62 on the shoulder 50 of the tube 48. A slight pressure is applied to the stopper 52 (in the vertical direction from top to bottom) by means of the handle 56 such that it passes into the hole 40 and shuts it off in a sealed manner. The plug 10 is then in the position shown in figure 5. The kitchen appliance 20 can be used for example for cooking pasta, it being possible for the water to be introduced into the vessel by the means 42. After the pasta has been cooked in the vessel, it is necessary to drain it off. For this purpose, the stopper 52 is removed from the hole and the handle 56 is positioned on the upper edge 59 of the vessel 38 (figures 3 and 4). The user may prefer to hold the plug himself in order to regulate the rate of draining of the vessel himself. The cooking water then flows through the space between the stopper 52 and the peripheral edge of the orifice 40 as far as the filter basket 55, in which it is filtered. Any pasta which passes through this space is retained by the filter basket 55. The cooking water which enters the filter basket passes through the orifices in the wall 60 thereof and then flows between the disk 64 and the tube 48 as far as the sewer through appropriate evacuation means. If the filter basket 55 is full and can no longer carry out its function, the user can raise the plug further in order to detach the basket 55 slightly from the shoulder 50 so as to facilitate the flow, without having to put his hands in the vessel. The slot 65 in the lower disk 64 of the filter basket 55 allows the filter basket to be emptied completely. Once the cooking water from the vessel has been removed entirely, the plug 10 can be removed fully from the drain hole 40 and the pasta can be evacuated through the hole 40 and collected in the tank 30 located under the cooking vessel. All that is then necessary is to remove the tank 30 from the space 28 in order to serve the pasta. It is also possible to collect the pasta located in the basket 55. The tilting of the stopper 52 with respect to the basket 55 makes it possible to easily empty the latter even though it is linked to the stopper. The tilting makes it possible to free the upper end of the basket 55 entirely. Similarly, cleaning of the basket 55 can be carried out under a faucet for example by passing it upside down under the latter, this operation not being hindered by the ring 62, the inside diameter of which is approximately equal to that of the filtering wall 60.

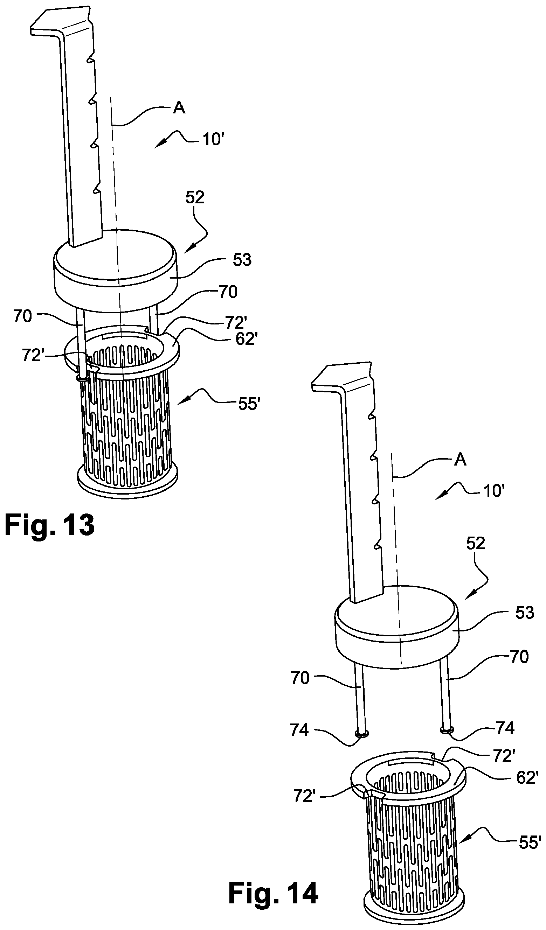

Reference is now made to figures 13 and 14, which show a variant embodiment of the invention in which the filter basket 55' is fixed to the stopper 52 in a removable manner, thereby allowing the filter basket to be disassembled from the rest of the plug 10', and thus facilitating the cleaning thereof.

The plug 10' according to the variant embodiment in figures 13 and 14 comprises all of the features of the plug 10 described above, apart from those that contradict the following.

In the example shown, the slots 72 in the ring of the plug 10 are replaced in this case by cutouts 72' which open out at the external peripheral edge of the ring 62'. As is the case for the slots 72, the notches 72' are designed to allow the rods 70 carried by the stopper 52 to slide and move. There are two notches 72' and they are diametrically opposite one another. Each notch 72' has in this case an elongate shape and is oriented substantially circumferentially about the axis A. Each notch 72' opens out at the peripheral edge of the ring 62' so as to define a lateral opening. Each notch 72' has a width (or radial dimension with respect to the axis A) greater than the diameter of or than the transverse dimension of the rod 70 and a length (or dimension in the circumferential direction) much greater than the diameter of the rod 70, such that the rods can slide freely in the slots in order to allow the abovementioned movements of the stopper 52 and of the filter basket 55' with respect to one another. Moreover, the opening of each notch 72' has a width (or circumferential dimension) which is greater than the diameter of the rod 70 in order to allow the rod 70 to come out of the notch and to allow the filter basket 55' to be disassembled from the stopper 52.

The ends of the rods 70 bearing the widened parts 74 may be spaced apart from one another, preferably manually by a user, in order to be able to take them out of the notches 72'.

In the example shown, the opposite ends of the rods 70 from these widened parts 74 are anchored in the seal 53 of the stopper 52. The rods 70 can be moved with respect to one another, for example by spacing apart their widened parts 74, by elastic deformation of the seal 53. The rods 70 are for example movable from a rest position in which they are approximately parallel to a disassembly position in which they form an angle in the region of 10-20°, for example, between one another.

The lower disk of the stopper 52, which is not visible here, should not impede the movement of the rods 70. It may comprise orifices through which the rods pass with play or else it may have an outside diameter less than the diameter of a circumference centered on the axis A and on which the rods 70 are located.

Generally, the invention has the advantage of combining the function of sealing and the function of filtering in a single component. This main advantage is combined with the following advantages:
- possibility of manually managing the flow rate by lifting the plug to a greater or lesser extent,
- possibility of a non-filtered maximum flow rate for large pieces for example,
- filtering position by positioning the handle in a dedicated shape of the appliance,
- possibility of calibrating the flow rate through the basket by dimensioning its lower disk,
- little influence of the plug on the cooking area (only the section of the handle is not usable),
- possibility of managing drainage and filtering from the handle located at the top of the vessel,
- ease of cleaning the basket by virtue of the movement thereof with respect to the stopper and on account of the fact that the upper end of the basket is open and free of any mechanism,
- captive basket (since it is not removable from the plug), and
- possibility of positioning a filtering sock in the filter basket for fine filtering.

The word approximately is used in connection with various terms herein, including the terms transverse, coaxial and parallel. Alternatively, the word substantially may be used in connection with any of the various terms, and in accordance with its plain
and ordinary meaning to those of ordinary skill in the art.

## Claims

1. A drain plug (10, 10'), which is preferably removable, for a drain hole (40), in particular of a kitchen appliance (20), having a stopper (52) designed to shut off said drain hole, and a filter basket (55, 55') which is designed to be received in said drain hole below said stopper, said filter basket being mounted so as to be able to move by sliding and/or by rotating with respect to a rod (70) carried by the stopper;
**characterized in that** the filter basket (55, 55') is connected, at its end opposite a transverse wall, to a ring (62, 62') wherein the ring (62, 62') comprises at least one orifice (72, 72') in which said rod (70) carried by, and extending downwardly from, the stopper (52) is mounted so as to be able to slide and/or rotate, wherein the filter basket (55, 55') is mounted so as to be able to move in translation along a longitudinal axis (A) of the stopper (52) and/or in rotation along this longitudinal axis and/or in rotation along an approximately transverse axis (B) of the stopper.

2. The drain plug (10, 10') as claimed in claim 1, **characterized in that** it is designed such that the filter basket (55, 55') is movable at least:
- from a first position in which it is close to the stopper (52) to a second position in which it is spaced apart from the stopper, the movement of the filter basket from the first position to the second position being carried out by the filter basket being moved in translation along the longitudinal axis (A) of the stopper, and/or
- from a third position in which it is approximately coaxial with the stopper to a fourth position in which its longitudinal axis forms an angle with that of the stopper, the movement of the filter basket from the third position to the fourth position being carried out by the filter basket being rotated about an approximately transverse axis (B).

3. The drain plug (10, 10') as claimed in one of the preceding claims, **characterized in that** the filter basket (55, 55') comprises at least one filter wall (60) having a plurality of orifices for liquid to pass through, this filter wall having for example an elongate tubular shape.

4. The drain plug (10') as claimed in one of the preceding claims, **characterized in that** the filter basket (55') is fixed to the stopper (52) in a removable manner.

5. The drain plug (10, 10') as claimed in one of the preceding claims, **characterized in that** the filter basket (55, 55') defines an internal space, one longitudinal end of which is closed by a transverse wall integral with the filter basket, said transverse wall preferably having a disk shape (64).

6. The drain plug (10, 10') as claimed in claim 1, **characterized in that** said ring (62, 62') has an outside diameter greater than an outside diameter or than the maximum transverse dimension of said filter basket (55, 55').

7. The drain plug (10, 10') as claimed in one of the preceding claims, **characterized in that** the stopper (52) is connected to a handle (56) for handling the plug.

8. The drain plug (10, 10') as claimed in claim 7, **characterized in that** the handle (56) is connected to one end of a bar (58) the opposite end of which is connected to the stopper (52), this bar preferably being graduated and/or approximately parallel to the longitudinal axis of the stopper.

9. An assembly having a plug (10, 10') as claimed in one of the preceding claims and a vessel (38), in particular a cooking vessel, this vessel having a wall (36) equipped with a drain hole (40) in which said drain plug (10, 10') is mounted, preferably in a removable manner, the stopper (52) of the plug being preferably designed to be inserted entirely into the drain hole.

10. The assembly as claimed in claim 9, the plug (10, 10') having the features of claim 1, **characterized in that** said drain hole (40) comprises an internal cylindrical shoulder (50) the inside diameter of which is greater than the outside diameter or than the maximum transverse dimension of said transverse wall and less than the outside diameter of said ring (62, 62').

11. The assembly as claimed in claim 9 or 10, the plug (10, 10') having the features of claim 7 or 8, **characterized in that** the handle (56) comprises or forms bearing means for bearing on a part (59) of the vessel (38) and means for keeping the stopper (52) in a position for draining the vessel.

12. A kitchen appliance, in particular a cooking appliance, having a drain plug (10, 10') as claimed in one of claims 1 to 8 or an assembly as claimed in one of claims 9 to 11.

## Patentansprüche

1. Ausgussstöpsel (10, 10'), der vorzugsweise abnehmbar ist, für eine Ausgussöffnung (40), insbesondere eines Küchengeräts (20), mit einem Stopfen (52), der zum Absperren der Ausgussöffnung ausgebildet ist, und einem Filterkorb (55, 55'), der zur Aufnahme in der Ausgussöffnung unterhalb des Stopfens ausgebildet ist, wobei der Filterkorb so montiert ist, dass er sich durch Gleiten und/oder Drehen in Bezug auf eine Stange (70), die von dem Stopfen getragen wird, bewegen kann;
**dadurch gekennzeichnet, dass** der Filterkorb (55, 55'), an seinem einer Querwand gegenüberliegenden Ende, mit einem Ring (62, 62') verbunden ist, wobei der Ring (62, 62') zumindest eine Öffnung (72, 72') aufweist, in der die Stange (70), die von dem Stopfen (52) getragen und sich von diesem nach unten erstreckt, so montiert ist, dass sie gleiten und/oder sich drehen kann, wobei der Filterkorb (55, 55') so montiert ist, dass er sich verschiebbar entlang einer Längsachse (A) des Stopfens (52) und/oder drehbar entlang dieser Längsachse und/oder drehbar entlang einer annähernd querverlaufenden Achse (B) des Stopfens bewegen kann.

2. Ausgussstöpsel (10, 10') nach Anspruch 1, **dadurch gekennzeichnet, dass** er so ausgebildet ist, dass der Filterkorb (55, 55') beweglich ist zumindest:
- aus einer ersten Position, in der er sich in der Nähe des Stopfens (52) befindet, in eine zweite Position, in der er von dem Stopfen beabstandet ist, wobei eine Bewegung des Filterkorbs aus der ersten Position in die zweite Position dadurch ausgeführt wird, dass der Filterkorb verschiebbar entlang der Längsachse (A) des Stopfens bewegt wird, und/oder
- aus einer dritten Position, in der er annähernd koaxial mit dem Stopfen ist, in eine vierte Position, in der seine Längsachse einen Winkel mit der des Stopfens bildet, wobei eine Bewegung des Filterkorbs aus der dritten Position in die vierte Position dadurch ausgeführt wird, dass der Filterkorb um eine annähernd querverlaufende Achse (B) gedreht wird.

3. Ausgussstöpsel (10, 10') nach einem der vorhergehenden Ansprüche, **dadurch gekennzeichnet, dass** der Filterkorb (55, 55') zumindest eine Filterwand (60) mit einer Vielzahl von Öffnungen zum Durchtritt von Flüssigkeit aufweist, wobei diese Filterwand beispielsweise eine längliche Rohrform aufweist.

4. Ausgussstöpsel (10') nach einem der vorhergehenden Ansprüche, **dadurch gekennzeichnet, dass** der Filterkorb (55') abnehmbar an dem Stopfen (52) befestigt ist.

5. Ausgussstöpsel (10, 10') nach einem der vorhergehenden Ansprüche, **dadurch gekennzeichnet, dass** der Filterkorb (55, 55') einen Innenraum definiert, dessen eines Längsende durch eine mit dem Filterkorb einstückig ausgebildete Querwand verschlossen ist, wobei die Querwand vorzugsweise eine Scheibenform (64) aufweist.

6. Ausgussstöpsel (10, 10') nach Anspruch 1, **dadurch gekennzeichnet, dass** der Ring (62, 62') einen Außendurchmesser aufweist, der größer als ein Außendurchmesser oder als die maximale Querabmessung des Filterkorbs (55, 55') ist.

7. Ausgussstöpsel (10, 10') nach einem der vorhergehenden Ansprüche, **dadurch gekennzeichnet, dass** der Stopfen (52) mit einem Griff (56) zum Greifen des Stöpsels verbunden ist.

8. Ausgussstöpsel (10, 10') nach Anspruch 7, **dadurch gekennzeichnet, dass** der Griff (56) mit einem Ende einer Stange (58) verbunden ist, deren gegenüberliegendes Ende mit dem Stopfen (52) verbunden ist, wobei diese Stange vorzugsweise abgestuft und/oder annähernd parallel zu der Längsachse des Stopfens ist.

9. Anordnung mit einem Stöpsel (10, 10') nach einem der vorhergehenden Ansprüche und einem Gefäß (38), insbesondere einem Kochgefäß, wobei dieses Gefäß eine Wand (36) aufweist, die mit einer Ausgussöffnung (40) versehen ist, in der der Ausgussstöpsel (10, 10'), vorzugsweise abnehmbar, montiert ist, wobei der Stopfen (52) des Stöpsels vorzugsweise dafür ausgebildet ist, vollständig in die Ausgussöffnung eingesetzt zu werden.

10. Anordnung nach Anspruch 9, wobei der Stöpsel (10, 10') die Merkmale aus Anspruch 1 aufweist, **dadurch gekennzeichnet, dass** die Ausgussöffnung (40) eine zylindrische Innenschulter (50) aufweist, deren Innendurchmesser größer als der Außendurchmesser oder die maximale Querabmessung der Querwand und kleiner als der Außendurchmesser des Rings (62, 62') ist.

11. Anordnung nach Anspruch 9 oder 10,
wobei der Stöpsel (10, 10') die Merkmale aus Anspruch 7 oder 8 aufweist, **dadurch gekennzeichnet, dass** der Griff (56) Lagermittel zur Lagerung auf einem Teil (59) des Gefäßes (38) und Mittel zum Halten des Stopfens (52) in einer Position zum Entleeren des Gefäßes aufweist oder bildet.

12. Küchengerät, insbesondere ein Kochgerät, mit einem Ausgussstöpsel (10, 10') nach einem der Ansprüche 1 bis 8 oder einer Anordnung nach einem der Ansprüche 9 bis 11.

## Revendications

1. Bouchon de vidange (10, 10'), qui est de préférence amovible, pour un trou de vidange (40), en particulier d'un appareil de cuisine (20), ayant un obturateur (52) conçu pour obturer ledit trou de vidange, et un panier filtrant (55, 55') qui est conçu pour être reçu dans ledit trou de vidange sous ledit obturateur, ledit panier filtrant étant monté de manière à pouvoir se déplacer par coulissement et/ou par rotation par rapport à une tige (70) portée par l'obturateur ;
**caractérisé en ce que** le panier filtrant (55, 55') est connecté, à son extrémité opposée à une paroi transversale, à un anneau (62, 62') dans lequel l'anneau (62, 62') comporte au moins un orifice (72, 72') dans laquelle ladite tige (70) portée par l'obturateur (52) et s'étendant vers le bas à partir de celui- ci, est montée de manière à pouvoir coulisser et/ou tourner, dans lequel le panier filtrant (55, 55') est monté de manière à pouvoir se déplacer en translation le long d'un axe longitudinal (A) de l'obturateur (52) et/ou en rotation le long de cet axe longitudinal et/ou en rotation le long d'un axe sensiblement transversal (B) de l'obturateur.

2. Bouchon de vidange (10, 10') selon la revendication 1, **caractérisé en ce qu'**il est conçu de sorte que le panier filtrant (55, 55') est mobile au moins :
- d'une première position dans laquelle il est proche de l'obturateur (52) à une deuxième position dans laquelle il est espacé de l'obturateur, le déplacement du panier filtrant de la première position à la deuxième position étant réalisé par le fait que le panier filtrant est déplacé en translation le long de l'axe longitudinal (A) de l'obturateur, et/ou
- d'une troisième position dans laquelle il est approximativement coaxial à l'obturateur à une quatrième position dans laquelle son axe longitudinal forme un angle avec celui de l'obturateur, le déplacement du panier filtrant de la troisième position à la quatrième position étant réalisé par la rotation du panier filtrant autour d'un axe approximativement transversal (B).

3. Bouchon de vidange (10, 10') selon l'une quelconque des revendications précédentes, **caractérisé en ce que** le panier filtrant (55, 55') comporte au moins une paroi filtrante (60) ayant une pluralité d'orifices de passage de liquide, cette paroi filtrante ayant par exemple une forme tubulaire allongée.

4. Bouchon de vidange (10') selon l'une quelconque des revendications précédentes, **caractérisé en ce que** le panier filtrant (55') est fixé à l'obturateur (52) de manière amovible.

5. Bouchon de vidange (10, 10') selon l'une quelconque des revendications précédentes, **caractérisé en ce que** le panier filtrant (55, 55') définit un espace interne dont une extrémité longitudinale est fermée par une paroi transversale solidaire avec le panier filtrant, ladite paroi transversale ayant de préférence une forme de disque (64).

6. Bouchon de vidange (10, 10') selon la revendication 1, **caractérisé en ce que** ledit anneau (62, 62') a un diamètre extérieur supérieur à un diamètre extérieur ou à la dimension transversale maximale dudit panier filtrant (55, 55').

7. Bouchon de vidange (10, 10') selon l'une quelconque des revendications précédentes, **caractérisé en ce que** l'obturateur (52) est relié à une poignée (56) pour la manipulation du bouchon.

8. Bouchon de vidange (10, 10') selon la revendication 7, **caractérisé en ce que** la poignée (56) est reliée à une extrémité d'une barre (58) dont l'extrémité opposée est reliée à l'obturateur (52), cette barre étant de préférence graduée et/ou approximativement parallèle à l'axe longitudinal de l'obturateur.

9. Ensemble ayant un bouchon (10, 10') selon l'une quelconque des revendications précédentes et un récipient (38), en particulier un récipient de cuisson, ce récipient ayant une paroi (36) équipée d'un trou de vidange (40) dans lequel ledit bouchon de vidange (10, 10') est monté, de préférence de manière amovible, l'obturateur (52) du bouchon étant de préférence conçu pour être inséré entièrement dans le trou de vidange.

10. Ensemble selon la revendication 9, le bouchon (10, 10') ayant les caractéristiques de la revendication 1, **caractérisé en ce que** ledit trou de vidange (40) comporte un épaulement cylindrique interne (50) dont le diamètre intérieur est supérieur au diamètre extérieur ou à la dimension transversale maximale de ladite paroi transversale et inférieur au diamètre extérieur dudit anneau (62, 62').

11. Ensemble selon la revendication 9 ou 10,
le bouchon (10, 10') ayant les caractéristiques de la revendication 7 ou 8, **caractérisé en ce que** la poignée (56) comprend ou forme des moyens d'appui pour l'appui sur une partie (59) du récipient (38) et des moyens pour le maintien de l'obturateur (52) dans une position pour la vidange du récipient.

12. Appareil de cuisine, en particulier appareil de cuisson, ayant un bouchon de vidange (10, 10') selon l'une des revendications 1 à 8 ou un ensemble selon l'une des revendications 9 à 11.
